Europäisches Patentamt

European Patent Office

Office européen des brevets

(19)

(11) Veröffentlichungsnummer : **0 399 359 B1**

(12)

# EUROPÄISCHE PATENTSCHRIFT

(45) Veröffentlichungstag der Patentschrift :
**12.04.95 Patentblatt 95/15**

(51) Int. Cl.⁶ : **H04Q 11/04, H04M 3/30**

(21) Anmeldenummer : **90109251.0**

(22) Anmeldetag : **16.05.90**

(54) **Anordnung zur Prüfung der Übertragungseigenschaften von Teilnehmeranschlussmodulen und von daran anschliessbaren digitalen Endgeräten eines Kommunikationssystems.**

(30) Priorität : **23.05.89 DE 3916772**

(43) Veröffentlichungstag der Anmeldung :
**28.11.90 Patentblatt 90/48**

(45) Bekanntmachung des Hinweises auf die
Patenterteilung :
**12.04.95 Patentblatt 95/15**

(84) Benannte Vertragsstaaten :
**AT BE CH DE ES FR GB IT LI NL**

(56) Entgegenhaltungen :
**DE-A- 2 451 794**
**DE-A- 3 513 551**
**GB-A- 2 146 205**

(73) Patentinhaber : **SIEMENS
AKTIENGESELLSCHAFT
Wittelsbacherplatz 2
D-80333 München (DE)**

(72) Erfinder : **Von Reusner, Detlef, Dipl.Ing.
Otto-Dischner-Weg 13
D-8000 München 60 (DE)**
Erfinder : **Borm, Winfried, Dipl.Ing. (FH)
Karl-Marx-Ring 31
D-8000 München 83 (DE)**

**Beschreibung**

An zeitgemäße digitale Kommunikationssysteme werden neben analogen Fernsprechendgeräten zunehmend immer mehr digitale Fernsprechendgeräte oder für Datenkommunikation ausgelegte Endgeräte angeschlossen. Der Anschluß digitaler Endgeräte erfolgt über die Peripherie des eigentlichen Kommunikationssysteme bildende Teilnehmeranschlußmodule, deren Aufgabe und Wirkungsweisen zumeist international standardisierten Vereinbarungen entsprechen. Diese vereinbarten Standards beziehen sich dabei zumeist auf Schnittstellen bestimmter Endgeräte mit einem Kommunikationssystem, wobei in der Praxis Teilnehmeranschlußmodule eine Vielzahl solcher Schnittstellen enthalten. Es ist beispielsweise bekannt, eine Teilnehmersatzbaugruppe SLMB (Subscriber-Line-Module-Burst-System) zum Anschluß digitaler, im Burst-Verfahren arbeitender Endgeräte an die Durchschalteeinheit eines Kommunikationssystems einzusetzen, wobei diese Teilnehmersatzbaugruppe acht sogenannte U200-Schnittstellen aufnimmt. Die Informationen von und zum Endgerät werden dabei über jeweils eine Zweidrahtleitung mit einem 20 Bit-Burst-Verfahren nach dem Zeitgetrenntlagenprinzip übertragen. Die Bitrate pro Richtung beträgt 80 KBit/s und setzt sich aus einem 64 KBit/s-Sprachkanal und jeweils 8 KBit/s für Signalisierung und Synchronisierung zusammen. Die Teilnehmersatzbaugruppe setzt die vermittlungsseitigen Informationen von zwei PCM-Kanälen von einem Koppelnetz des Kommunikationssystems und von einer HDLC-Strecke (High Level Data Link Control) auf das Burst-Verfahren um und umgekehrt. In jeder der U200-Schnittstellen erfolgt eine Geschwindigkeitsanpassung zwischen Übertragungstakt und Verarbeitungstakt, das vieradrige transparente Umsetzen der 64 KBit/s-Nutzkanalinformationen zwischen dem Teilnehmeranschlußmodul und der Teilnehmeranschlußleitung sowie das Codieren, Einblenden, bzw. Abgreifen und Decodieren der Betriebssignalisierung am B-Kanal einer digitalen Übertragung. Weitere von der U200-Schnittstelle übernommene Aufgaben sind das Zusammenstellen und Trennen der Burst-Informationen, die Rahmenüberwachung sowie die Zustandssteuerung des Senders und Zeitsteuerung des adaptiven Empfängers.

Zum Anschluß von ISDN-Endgeräten an digitale Kommunikationssysteme dienen Teilnehmeranschlußmodule SLMD, die z. B. vier gemäß einer CCITT-Empfehlung mit $U_{PO}$ bezeichnete Schnittstellen enthalten; es handelt sich dabei um Zweidraht-Schnittstellen, die nach dem Zeitgetrenntlageverfahren arbeiten. Jede der vier Anschlußleitungen bietet zwei B-Kanäle mit 64 KBit/s für die Nachrichtenübertragung und einen D-Kanal mit 16 KBit/s für die Übertragung von Signalisierungsinformationen. Auch hier werden von den Schnittstellen vielfältige Aufgaben übernommen, von denen die Bildung der Rahmenstruktur, das Verschlüsseln der Sendedaten, das Aussenden mit einem vom Systemtakt abgeleiteten Sendetakt, die Echokompensation und die Trennung der D- und B-Kanal-Bitströme genannt seien.

Die übertragungstechnische Überprüfung der digitalen Schnittstellen bzw. der digitalen Teilnehmeranschlußmodule, d. h. die Überprüfung aller relevanten physikalischen Parameter dieser Schnittstellen, ist insbesondere im Hinblick auf die Fülle der übertragungstechnischen Parameter, die kontrolliert werden müssen, nicht so befriedigend möglich, daß eine automatische Messung oder Prüfung im Rahmen der Fertigung von Kommunikationssystemen möglich wäre.

Die der Erfindung zugrundeliegende Aufgabe besteht darin, eine Anordnung zu schaffen, in der sowohl solche Teilnehmeranschlußmodule als auch die daran anschließbaren digitalen Endgeräte hinsichtlich ihrer Übertragungseigenschaften mit einer den Einsatz in der Praxis ermöglichenden Flexibilität in der Einstellung der Eigenschaften der Informationssender und der Typen und Längen der verwendeten Kabel prüfbar sind. Die Lösung dieser Aufgabe erfolgt durch die Anordnung gemäß Patentanspruch 1.

Die wesentlichen Strukturmerkmale der erfindungsgemäßen Anordnung sind darin zu sehen, daß die Informationsgabe vom digitalen Endgerät an ein Teilnehmeranschlußmodul oder in umgekehrter Richtung digital nachgebildet wird, wobei die Beeinflussung der Prüfimpulse durch die Übertragungseigenschaften unterschiedlicher Kabel mittels digitale Nachbildung dieser Kabeleigenschaften in die Messung einbezogen ist. Eine weitere Anpassung der Prüfungsbedingungen an reale Übertragungseigenschaften erfolgt durch digitale Generierung eines Jitters, der in Jitterfrequenz, Jitterhub und Jitterkurvenform programmierbar ist.

Als Kriterium für die Beurteilung der Übertragungseigenschaften in Empfangsrichtung dient die Anzahl der Bitfehler. Diese Bitfehler werden durch Vergleich der gesendeten mit den empfangenen Prüfimpulsen bestimmt. Für die Praxis erweist es sich als sinnvoll, daß die Prüfimpulse derart ausgelegt werden, daß der Empfänger an der Grenze seiner Möglichkeiten der Unterscheidung von Impulsen betrieben wird. Dadurch werden durch verhältnismäßig kurzzeitige Messungen Aussagen über die Empfangseigenschaften möglich. In der Praxis wird angestrebt, daß die Bitfehlerrate, d. h. die Zahl der fehlerhaft interpretierten Bits im Verhältnis zur Gesamtzahl der übertragenen Bits, in einem Bereich liegt, für den kurze Messungen genügen. Sinnvolle Bitfehlerraten dieser Art liegen etwa bei 0,001 bis 0,01. Zur Schaffung solcher Bitfehlerraten wird das in der erfindungsgemäßen Anordnung verwendete Sendesignal - Prüfimpulse - solange "verschlechtert", bis solche Bitfehlerraten auftreten. Ausgehend von den erhaltenen Daten kann dann auf die im realen Betriebsfall zu er-

2

wartenden Bitfehlerraten geschlossen werden und danach die Güte des Prüflings beurteilt werden. Die Erfahrungswerte für eine solche Berechnung werden durch Vergleich mit herkömmlichen Bitfehlerratenmessungen an realen Kabeln gewonnen; auch theoretische Berechnungen und Abschätzungen können in diesem Zusammenhang eingesetzt werden.

Die verwendete Prüfmethode setzt voraus, daß die vom Prüfling kommenden Signale störungsfrei von der Empfangseinrichtung interpretiert werden können. Demgemäß werden für diese Übertragungsrichtung optimale Übertragungseigenschaften geschaffen, d. h., daß möglichst kurze Kabel verwendet werden und der Sender des Prüflings mit einer spezifizierten Impedanz abgeschlossen wird. Zur Beurteilung der Sendeeigenschaften wird gemäß einer vorteilhaften Weiterbildung der Erfindung an die Leitungsschnittstelle des jeweiligen Prüflings eine der Erfassung der Sendesignale des Prüflings dienende Abtasteinrichtung angeschaltet, die einen Speicher zur Abspeicherung der abgetasteten Signalwerte wenigstens eines Burst-Zyklus aufweist. Mit Hilfe der gespeicherten Signalwerte können folgende Parameter bestimmt werden:
- Eingangs- und Ausgangsimpedanz
- Pulsform
- Pulssymmetrie
- Symmetrie gegen Erde
- Jitter des Sendesignals.

Weitere vorteilhafte Ausgestaltungen der Erfindung beziehen sich auf die einen wesentlichen Bestandteil derselben ausmachende Sendeeinrichtung, mit der die Nachbildung eines analogen Pulssenders sowie die Nachbildung eines realen Teilnehmerkabels vorgenommen wird. Mit der Sendeeinrichtung werden also alle vorkommenden Kabeltypen und Kabellängen sowie Impulsformen und Impulsamplituden in einer für die Belange der Praxis ausreichenden Variationsbreite eingestellt. So müssen beispielsweise für die Prüfung einer U200-Schnittstelle Cosinus-Quadrat-Impulse mit einer Pulsfolgefrequenz von 256 KHz erzeugt werden können; für die Prüfung einer $U_{PO}$-Schnittstelle werden Rechteckimpulse mit 384 KHz erzeugt. Weitere wesentliche Aufgabe der Sendeeinrichtung ist die definierte Verjitterung des Ausgangssignals.

Zur Erzeugung eines solchen im Hinblick auf die wesentlichen Kennungsdaten definierten Jitters sieht eine vorteilhafte Weiterbildung der Erfindung vor, daß in einem die Jitterkennungsdaten aufnehmenden digitalen Speicher - Jitterspeicher -, der als Schreib-Lese-Speicher ausgebildet ist, Folgen von Zahlenwerten gespeichert sind, die einen Jitter des Auslesetaktes für die einzelnen Bits eines Bursts in Jitterfrequenz, Jitterhub und Jittercharakteristik festlegen.

Ein derartiger Jitterspeicher bzw. -Generator ist bereits aus GB-A-2146205 bekannt.

Bestimmte in der Praxis auftretende Kabeltypen bzw. größere Längen derselben führen bei der Übertragung der digitalen Informationen mit den dafür vorgesehenen Übertragungsgeschwindigkeiten zu einer erheblichen zeitlichen Dehnung der am Ende einer Übertragungsstrecke empfangenen Pulse gegenüber der Pulsbreite der am Anfang der Strecke ausgesendeten Pulse. Eine Anpassung an diese Gegebenheiten wird in vorteilhafter Weise dadurch erzielt, daß die Sendeeinrichtung eine einer vorgegebenen maximalen Anzahl von sich zeitlich überlappenden Impulsen entsprechende Zahl von Kurvenformspeichern aufweist, in denen jeweils eine Kurvenform durch eine vorgegebene Zahl von Datenworten repräsentiert ist. Für die Praxis erweisen sich acht derartige Kurvenformspeicher als ausreichend, wobei jeder Prüfimpuls in jedem von - beispielsweise 128 - Abtastschritten durch die Datenworte von acht Kurvenformspeichern zusammengesetzt ist. Dies erfolgt bevorzugt derart, daß Ausgänge der Kurvenformspeicher parallel an Eingänge eines Addiermoduls geführt sind. Der auf die Teilnehmerleitung abzugebende jeweilige Prüfimpuls wird dadurch erzeugt, daß ein Ausgang des Addiermoduls mit einem Digital-/Analog-Wandler verbunden ist, dessen Ausgang an den Eingang eines an eine Teilnehmerleitung angeschlossenen Tiefpasses geführt ist.

Eine weitere Anpassung an die für die Praxis benötigte Vielfalt von Impulsformen wird dadurch erreicht, daß jeder Kurvenformspeicher wenigstens drei Speicherbereiche aufweist, in denen die Kurvenform eines positiven Impulses, eines negativen Impulses und eines Nullpulses gespeichert sind. Diese Lösung ist im Hinblick auf den geringen Zeitbedarf für die Bildung der Prüfimpulse gegenüber einer anderen im Hinblick auf den Speicherbedarf günstigeren Lösung vorzuziehen, gemäß der die für einen positiven Puls gespeicherten Datenworte für die Bildung eines negativen Prüfimpulses invertiert würden.

Der zeitliche Abstand zwischen den Pulsen wird - wie bereits beschrieben - durch den Inhalt des Jitterspeichers festgelegt. Durch Einschreiben unterschiedlicher Werte für den Abstand in den Jitterspeicher können verjitterte Signale erzeugt werden. Der kleinste Schritt, um den ein Puls zeitlich von der Lage bei konstanter Pulsfolgefrequenz abweichen kann, ist durch die Abtastfrequenz vorgegeben und beträgt z. B. bei 4096 KHz 244 ns. Für den Fall, daß dieses Raster - Grobjitter - als zu groß angesehen wird, können auch kleinere Schritte durch eine weitere vorteilhafte Ausgestaltung der Erfindung dadurch erzielt werden, daß in jedem Kurvenformspeicher 'n' identische Kurvenformen gespeichert sind, die zeitlich gegeneinander um $\dfrac{1}{n \times a}$ versetzt

sind (a = Frequenz des Auslesetaktes).

Die Erfindung wird im folgenden anhand eines in vier Figuren dargestellten Ausführungsbeispiels erläutert. Dabei zeigt

Figur 1    die Struktur und die wesentlichen Bestandteile einer Anordnung zur Prüfung der Übertragungseigenschaften von Teilnehmeranschlußmodulen und von daran anschließbaren digitalen Endgeräten,

Figur 2    die in Figur 1 enthaltene Empfangseinrichtung für die Prüfung einer U200-Schnittstelle,

Figur 3    die in Figur 1 enthaltene Empfangseinrichtung für die Prüfung einer $U_{PO}$-Schnittstelle und

Figur 4    die wesentlichen Bestandteile der in der Figur 1 enthaltenen Sendeeinrichtung.

Die Steuerung des Meß- und Prüfablaufes in der dargestellten Anordnung erfolgt mittels eines Personal Computers PC, der über einen passiven Systembus SB verfügt, and den neben rechnereigenen Baugruppen, wie z. B. eine Eingabe/Ausgabe-Karte I/O-C, auch Module der eigentlichen Prüfanordnung anschaltbar sind. Der Mikrocomputer PC dient darüberhinaus zur Kommunikation mit den Benutzern der Prüfanordnung.

Ein übergeordneter wesentlicher Bestandteil der dargestellten Prüfanordnung ist eine Selektionssteuereinrichtung SSE, die zur Initialisierung von Teilnehmeranschlußmodulen innerhalb eines zu prüfenden Kommunikationssystems und zur Ankopplung zu untersuchender Teilnehmerschnittstellen an die eigentliche Prüfeinrichtung dient. Dies ist durch die Einflußpfeile zwischen der Selektionssteuereinrichtung SSE und einem Prüfling P symbolisiert, der sowohl ein Teilnehmeranschlußmodul als auch eine Sende- und Empfangsschnittstelle eines digitalen Endgerätes darstellen kann.

Eine Koppeleinrichtung NT bildet die eigentliche Schnittstelle zwischen dem zu untersuchenden Teilnehmeranschluß bzw. Endgerät und einer Empfangseinrichtung EE bzw. einer Sendeeinrichtung SE als weiteren wesentlichen Bestandteilen der Prüfanordnung. Ist der Prüfling P z. B. die Sende- und Empfangsschnittstelle eines Endgerätes, dann übernimmt die gesamte Prüfanordnung die grundlegenden Funktionen der Vermittlungssteuerung eines Kommunikationssystems und an der Koppeleinrichtung NT wird die Speisespannung eingekoppelt. Ist der Prüfling dagegen ein Teilnehmeranschlußmodul, dann ist die gesamte Prüfanordnung so geschaltet, daß sie die grundlegenden Funktionen eines Endgerätes übernimmt und an der Koppeleinrichtung NT wird die Speisespannung ausgekoppelt.

Die Koppeleinrichtung NT hat darüberhinaus ähnliche Aufgaben wie eine Gabelschaltung, d. h., daß von der Sendeeinrichtung SE abgegebene Prüfimpulse auf den Prüfling weitergegeben werden und die im Sinne einer Prüfschleifenbildung durch den Prüfling P wieder abgegebenen Impulse an die Empfangseinrichtung EE zur Bewertung weitergeleitet werden.

Ein weiterer Bestandteil der Prüfanordnung ist eine Abtasteinrichtung AE, mit der die Sendesignale des Prüflings P zur Koppeleinrichtung NT abgetastet und nach Analog-/Digital-Wandlung A/D in einem Speicher RAM abgespeichert werden. Der die Prüfanordnung steuernde Mikrocomputer PC startet den Vorgang des Abtastens und kann auf die gespeicherten Signalwerte lesend zugreifen. Mit Hilfe der gespeicherten Signalwerte, wobei vorzugsweise drei Burst-Zyklen abgespeichert werden, können relevante Parameter der Übertragungseigenschaften des Prüflings P bestimmte werden. So kann beispielsweise die Eingangs- und Ausgangsimpedanz des Prüflings P aus den abgetasteten Spannungswerten und der bekannten Eingangsimpedanz der Abtasteinrichtung AE berechnet werden. Die Pulsform und die Pulssymmetrie können durch Abtastung und geeignete Auswertung ebenfalls im Mikrocomputer PC bewertet werden. Dazu werden die vom Sender des Prüflings P kommenden Leitungspulse mit abgespeicherten Toleranzschemata verglichen.

Unabhängig davon, welche Art von Schnittstelle - z. B. U200 oder $U_{PO}$-geprüft wird, muß die Empfangseinrichtung grundsätzlich folgende Funktionen ausüben. Sie übernimmt die grundlegenden Funktionen eines Teilnehmeranschlußmoduls oder der Schnittstellenschaltung eines digitalen Endgerätes. Dazu gehört das Empfangen der vom Prüfling P auf die Leitung gegebenen Signale. Da die digitale Leitungsnachbildung nur in der zum Prüfling P hin führenden Richtung vorhanden ist, kann die Empfangseinrichtung auf herkömmliche Weise mit analogen üblichen Empfangsbausteinen aufgebaut werden.

Da die Prüfling der Übertragungseigenschaften auf der Messung von Bitfehlerraten beruht, werden vom steuernden Mikrocomputer PC Sendedaten über einen Systembus SB an die Empfangseinrichtung EE weitergegeben, die von dieser an die Sendeeinrichtung SE übermittelt werden. Da im Prüfling P eine Prüfschleife eingestellt wird, werden die von dem Prüfling P empfangenen Daten über die Koppeleinrichtung NT an die Empfangseinrichtung EE zurückgesendet. Der zur Bestimmung der Bitfehlerrate notwendige Vergleich der empfangenen mit den ursprünglich gesendeten Daten kann entweder blockweise durch den in der Empfangseinrichtung EE vorgesehenen Mikroprozessor µP oder durch den steuernden Mikrocomputer PC erfolgen, der die Daten aus einem Speicher RAM der Empfangseinrichtung EE ausliest.

Die Steuerung der Übergabe von Sendedaten an die Sendeeinrichtung SE sowie die gesamte Steuerung des Empfangseinrichtungsmoduls erfolgt mit Hilfe des Mikroprozessors µP, dem neben dem Speicher RAM ein weiterer Speicher EPROM zur Aufnahme von Firmware zugeordnet ist.

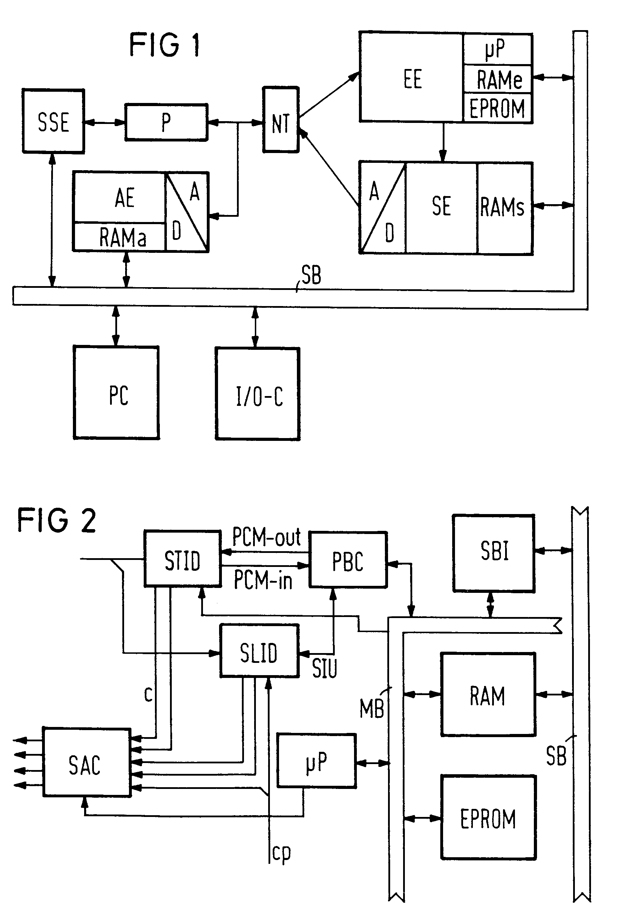

Die Figur 2 zeigt den Aufbau und die grundsätzliche Wirkungsweise einer Empfangseinrichtung für die Prüfung einer U200-Schnittstelle. Wesentlicher Bestandteil der Empfangseinrichtung neben den bereits in Figur 1 angedeuteten Strukturbestandteilen derselben sind die für den Anschluß digitaler Endgeräte bekannten U200-Sende-/Empfangssteuerbausteine STID (Station Interface Digital) und SLID (Subscriber Line Interface Digital) sowie der den beiden Steuerbausteinen den STID, SLID hierarchisch übergeordnete Peripheriecomputer PBC (Peripheral Board Computer). Der in der Figur 2 nicht dargestellte zentrale Mikrocomputer kann sowohl über den Systembus SB direkt als auch über ein Systembus-Interface SBI auf den Speicher RAMe als auch über zugreifen. Mit Hilfe des Speichers RAMe erfolgt eine indirekte Kopplung mit einem Mikroprozessorbus MB.

Ist der Prüfling ein Teilnehmeranschlußmodul, so ist der Sende-Empfangssteuerbaustein STID aktiviert, der an seiner Prozessorschnittstelle nur die Möglichkeit bietet, die D-Kanal-Daten zu kontrollieren; dies erfolgt über eine direkte Verbindung des Sende-Empfangssteuerbausteins STID mit dem Mikroprozessorbus MB. B-Kanal-Daten müssen dagegen über einen PCM-Highway (PCM-out, PCM-in) verarbeitet werden, was über den Peripheriecomputer PBC erfolgt.

Ist der Prüfling die Schnittstellenschaltung eines digitalen Endgerätes, so ist der Sende-Empfangssteuerbaustein SLID aktiviert; alle Sende- und Empfangsdaten werden in diesem Betriebsfall vom Mikroprozessor $\mu$P über den Mikroprozessorbus MB an den Peripheriecomputer PBC übergeben und von dort über eine serielle bidirektionale Schnittstelle SIU zum Sende-Empfangssteuerbaustein SLID geführt.

Eine Senderansteuerung-Codiereinrichtung SAC dient der Erzeugung von Eingangssteuersignalen für die Sendeeinrichtung (siehe Figur 1). Je nach Betriebsart werden entweder ein Steuersignal des Sende-Empfangssteuerbausteins STID und der leitungssynchrone Takt c (256 KHz) oder Signale des EmpfangssteuerbausteinsSLID und ein zentraler Arbeitstakt cp (2048 KHz) verwendet. Die Initialisierung und Steuerung der Senderansteuer-Codiereinrichtung SAC erfolgt durch den Mikroprozessor $\mu$P.

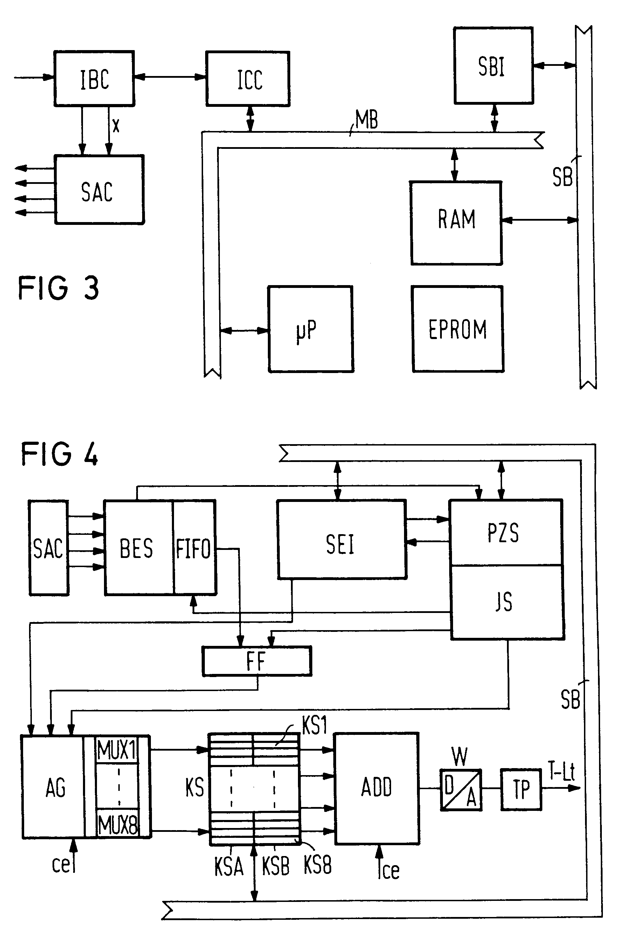

Die in der Figur 3 dargestellte Ausbildung der Empfangseinrichtung (EE, Figur 1) ist in wesentlichen Teilen die gleiche wie die der in der Figur 2 dargestellten Empfangseinrichtung. Der Mikroprozessor $\mu$P, die beiden Speicher RAM und EPROM sind wiederum an den Mikroprozessorbus MB angeschlossen, über den mittels des Speichers RAMe und des Systembus-Interface SBI die Verbindung zum nicht dargestellten zentralen steuernden Mikrocomputer PC (Figur 1) erfolgt, der darüberhinaus einen direkten Zugriff über den Systembus SB auf den Speicher RAMe hat.

Die Unterschiede zu der Empfangseinrichtung gemäß Figur 2 ergeben sich im wesentlichen durch die andere Art der verwendeten Empfangsbausteine, die auf die zu prüfende $U_{PO}$-Schnittstelle abgestimmt sind. Als Sende- und Empfangsbaustein wird ein ISDN-Steuerbaustein IBC (ISDN Burst Controller) verwendet, der sowohl Bestandteil eines Teilnehmeranschlußmoduls als auch einer Schnittstellenschaltung eines ISDN-Endgerätes sein kann. Am Mikroprozessor-Interface eines weiteren Steuerbausteins ICC (ISDN Communication Controller) können sowohl die B-Kanäle als auch der D-Kanal einer ISDN-Übertragung kontrolliert werden. Die Senderansteuer-Codiereinrichtung SAC wird in ähnlicher Weise durch ein Steuersignal und einen leitungssynchronen Takt × (1,536 MHz) gesteuert. Die vier Ausgangsleitungen der Senderansteuer-Codiereinrichtung SAC führen dieselben Arten von Steuerbefehlen für die Sendeeinrichtung (Figur 1) wie die Ausgangsleitungen der Senderansteuer-Codiereinrichtung SAC der Figur 2. Ein Signal auf der ersten Leitung bedeutet, daß ein positiver Puls zu senden ist. Ein Signal auf der zweiten Leitung bedeutet, daß ein negativer Puls zu senden ist. Sind auf diesen beiden Leitungen keine Signale vorhanden, bedeutet dies, daß kein Puls gesendet wird (AMI-Code).

Auf der dritten Steuerleitung wird ein Leitungsdatentakt übertragen. Mit jeder positiven Flanke der Taktimpulse werden die Signale auf den ersten beiden Leitungen ausgewertet (der Takt beträgt für die U200-Schnittstelle 256 KHz, für die $U_{PO}$-Schnittstelle 384 KHz).

Auf der vierten Leitung wird ein Burst-Start-Puls übertragen, der den Beginn eines Bursts - 20 Bit für die U200-Schnittstelle; 38 Bits für die $U_{PO}$-Schnittstelle - markiert.

Die in der Figur.4 dargestellte Sendeeinrichtung wird von den Ausgangssignalen der Sendeansteuer-Codiereinrichtung SAC gesteuert. Wird beispielsweise bei der Prüfung einer U200-Schnittstelle eine länger als 100 ms dauernde Pause auf der mit der Sendeansteuer-Codiereinrichtung SAC verbundenen Steuerleitung des Sende-Empfangssteuerbausteins STID (Figur 2) erkannt, dann wird beim Auftreten des ersten Pulses auf dieser Leitung - immer vorhandener Synchronpuls - ein Burst-Start-Puls erzeugt. Wenn eine Burst-Empfangs- und Sendelogik BES diesen Puls erhält, ist ihr Speicher FIFO, der zur Zwischenspeicherung der Bits eines Bursts dient, leer. Mit dem von der Senderansteuer-Codiereinrichtung SAC übermittelten Takt werden die Zustände der beiden anderen Steuerleitungen in den Speicher FIFO übernommen. Damit ist das Timing für die Übernahme von Sendedaten in die Sendeeinrichtung immer von der Empfangseinrichtung und damit von der tatsächlichen Taktrate und Taktphase auf der Teilnehmerleitung bestimmt.

Eine programmierbare Zeitsteuereinrichtung PZS enthält - im einzelnen nicht dargestellt - einen durch einen DMA-Adreßgenerator (Direct Memory Access) realisierten Jitteradreßzähler JS, einen Jitterspeicher und einen Jitterzähler. Der Jitterzähler wird mit dem zentralen Arbeitstakt - 4,096 MHz - getaktet und jeweils aus dem Jitterspeicher JS initialisiert. Hat der Jitterzähler auf Null heruntergezählt, dann wird der Jitteradreßzähler einen Takt weitergeschaltet. Der Zählerstand dient dann als Adresse für den nachgeschalteten Jitterspeicher JS, der den Auslesetakt für den Burst aus dem FIFO der Burst-Empfangs- und Sendelogik BES bestimmt. Die verjitterten Startpulse werden aus dem Jitterspeicher JS einem Adreßgenerator AG zugeführt, der ebenfalls mit dem Arbeitstakt cl von 4,096 MHz getaktet ist. Insgesamt acht Adreßzähler für je acht Bit zählen taktgerecht nach dem Erhalt eines Startpulses von 0 bis 128 und bleiben dann stehen. Wird bereits vor dem Erreichen des Endstandes ein Startpuls empfangen, dann wird zu diesem Zeitpunkt bei 0 neu gestartet.

Der Adreßgenerator AG bewirkt über Multiplexer MUX das Auslesen von Datenworten innerhalb eines Kurvenformspeichers KS. Um störungsfreie Änderungen der Kurvenformen während des Auslesens vornehmen zu können, sind alle Kurvenformen zweimal abgespeichert, d. h., daß der Kurvenformspeicher KS zwei Speicherbänke KSA, KSE aufweist. Die verwendete Prüfmethode sieht vor, daß sich bis zu acht Einzelimpulse zeitlich überlagern können. Aus diesem Grund sind alle Kurvenformen achtfach in jeweils einem eigenen Kurvenformspeicher KS1...KS8 abgespeichert. Um einen Feinjitter erzeugen zu können, der kleinere Verschiebungen von Pulsen gegenüber dem durch den Übertragungstakt vorgegebenen festen Zeitpunkten abweichen kann als durch den Jitterzähler der programmierbaren Zeitsteuerung PZS vorgegeben, werden in jedem Kurvenformspeicher KS1...KS8 jeweils vier miteinander identische Kurven abgespeichert, die jeweils um

$$\frac{I}{4 \times 4,096 \text{ MHz}} = 61 \text{ ns}$$ gegeneinander verschoben sind. Eine noch weitergehendere Unterteilung der Speicherbereiche innerhalb der Kurvenformspeicher KS1...KS8 dadurch gegeben, daß sowohl für einen positiven Puls, einen negativen Puls als auch zwei Nullpulse Kurvenformen abgespeichert sind.

In einem dem Kurvenformspeicher KS nachgeschalteten Addierer ADD, der vom Arbeitstakt cl getaktet ist, werden demgemäß während der Übertragung eines Pulses 128 mal jeweils acht aus den Kurvenformspeichern KS1...KS8 ausgelesene Datenworte addiert. Die sich daraus ergebende Summe wird über einen Digital-/Analog-Wandler W und einen nachgeschalteten Tiefpaß TP auf die Teilnehmerleitung T-Lt abgegeben.

Die gesamte Sendeeinrichtung muß von dem zentralen Mikrocomputer (PC; Figur 1) gesteuert werden können. Dazu dient ein Sendeeinrichtungs-Interface SEI, mit dessen Hilfe Funktionen, wie Programmieren des Jitteradreßzählers, Beschreiben des Jitterspeichers JS, Beschreiben der Kurvenformspeicher KS1...KS8 und Umschalten zwischen den beiden Kurvenformspeicherbänken KSA, KSE, erfüllt werden.

**Patentansprüche**

1. Anordnung zur Prüfung der Übertragungseigenschaften von Teilnehmeranschlußmodulen und von daran anschließbaren digitalen Endgeräten eines Kommunikationssystems mit einer Selektionssteuereinrichtung (SSE) zur Initialisierung jeweils eines der Teilnehmeranschlußmodule und Anschaltung einzelner Teilnehmerschnittstellen desselben sowie einzelner Endgeräte an eine Prüfeinrichtung,
   a) mit einer Sendeeinrichtung (SE) zur Erzeugung von Prüfimpulsen, die zu Bursts zusammengefaßte Bits repräsentieren und im Sinne der Nachbildung bestimmter Kabeltypen und Längen derselben durch Auslesen von Kurvenformkenndaten und Jitterkennungsdaten aus digitalen Speichern sowie Digital-/Analog-Wandlung der ausgelesenen Daten in Form und Amplitude definiert ausgebildet und definiert verjittert sind,
   b) mit einer Empfangseinrichtung (EE) zur Aufnahme der vom Prüfling (P) empfangenen und im Zuge eines im Sinne einer Prüfschleife wirkenden Verarbeitungsvorgangs wieder ausgesendeten Prüfimpulse, in der bei Prüfung eines Teilnehmeranschlußmoduls die Empfangseigenschaften eines digitalen Endgerätes und bei Prüfung eines Endgerätes die Empfangseigenschaften eines Teilnehmeranschlußmoduls einstellbar sind,
   c) mit einer Auswerteeinrichtung ($\mu$P) zum Vergleich der von der Sendeeinrichtung (SE) gesendeten Prüfimpulse mit den von der Empfangseinrichtung (EE) empfangenen Prüfimpulsen,
   d) mit einer Koppeleinrichtung (NT) zur Ankopplung der Sendeeinrichtung (SE) und der Empfangseinrichtung (EE) an die Leitungsschnittstelle des jeweiligen Prüflings (P),
   e) und mit einem Zentral-Mikrocomputer (PC) zur Koordinierung der Sendeeinrichtung (SE), Empfangseinrichtung (EE), Auswerteeinrichtung (AE) und Selektionssteuereinrichtung (SSE).

2. Anordnung nach Anspruch 1,
   **dadurch gekennzeichnet,**
   daß an die Leitungsschnittstelle des jeweiligen Prüflings (P) eine der Erfassung der Sendesignale des Prüflings (P) dienende Abtasteinrichtung (AE) angeschaltet ist, die einen Speicher (RAMa) zur Abspeicherung der abgetasteten Signalwerte wenigstens eines Burst-Zyklus aufweist.

3. Anordnung nach Anspruch 1 oder 2,
   **dadurch gekennzeichnet,**
   daß die Selektionssteuereinrichtung (SSE) mit peripheren und peripherienahen Funktionsmodulen ausgestaltet ist, die mit entsprechenden Funktionsmodulen des die zu prüfenden Teilnehmeranschlußmodule und Endgeräte umfassenden Kommunikationssystems zumindest funktionsgleich sind.

4. Anordnung nach einem der Ansprüche 1 bis 3,
   **dadurch gekennzeichnet,**
   daß die Empfangseinrichtung (EE) einen Mikroprozessor ($\mu$P) mit wenigstens einem zugeordneten Speicher (RAMe) für die Kommunikation mit dem Zentral-Mikroprozessor (PC) und für die Steuerung der Empfangseigenschaften der Empfangseinrichtung (EE) aufweist.

5. Anordnung nach Anspruch 4,
   **dadurch gekennzeichnet,**
   daß der Speicher (RAMe) der Aufnahme der von der Sendeeinrichtung (SE) zu sendenden Prüfimpulse und der Mikroprozessor ($\mu$P) als Auswerteeinrichtung zum Vergleich der gespeicherten Sendeimpulse mit den von der Empfangseinrichtung (EE) empfangenen Prüfimpulsen dient.

6. Anordnung nach Anspruch 4 oder 5,
   **dadurch gekennzeichnet,**
   daß die Empfangseinrichtung (EE) eine Endgeräte-Schnittstelleneinrichtung (STID) aufweist, die mittels eines PCM-Highways (PCM-in, PCM-out) mit einem Peripherie-Prozessor (PBC) und mittels einer HDLC-Leitung mit einem dem Mikroprozessor ($\mu$P) zugeordneten Mikroprozessorbus (MB) verbunden ist.

7. Anordnung nach Anspruch 6,
   **dadurch gekennzeichnet,**
   daß an die Endgeräte-Schnittstelleneinrichtung (STID) Ausgangsleitungen angeschlossen sind, von denen eine (c) leitungssynchrone Taktimpulse und eine weitere Synchron-Pulse führt und die Eingänge einer der Ansteuerung der Sendeeinrichtung (SE) dienenden Senderansteuer-Codiereinrichtung (SAC) darstellen.

8. Anordnung nach einem der Ansprüche 4 bis 7,
   **dadurch gekennzeichnet,**
   daß die Empfangseinrichtung (EE) eine Teilnehmer-Schnittstelleneinrichtung (SLID) aufweist, die mittels einer seriellen bidirektionalen Schnittstelle (SIU) mit dem Peripherie-Prozessor (PBC) verbunden ist.

9. Anordnung nach den Ansprüchen 7 und 8,
   **dadurch gekennzeichnet,**
   daß an die Teilnehmer-Schnittstelleneinrichtung (SLID) Ausgangsleitungen angeschlossen sind, von denen zwei schnittstelleneinrichtungsspezifische Signale führen und die Eingänge der Senderansteuer-Codiereinrichtung (SAC) darstellen.

10. Anordnung nach einem der Ansprüche 4 und 5,
    **dadurch gekennzeichnet,**
    daß die Empfangseinrichtung (EE) einen ISDN-Empfangsbaustein (IBC) aufweist, der als Schnittstelleneinrichtung für Teilnehmeranschlüsse und für Endgeräte betreibbar ist und der über eine ISDN-Schnittstelle mit einem Kommunikations-Steuerprozessor (ICC) verbunden ist, an dessen Schnittstelle zum Mikroprozessor ($\mu$P) die B-Kanäle und der D-Kanal der ISDN-Informationen kontrollierbar sind.

11. Anordnung nach Anspruch 10,
    **dadurch gekennzeichnet,**
    daß ein Taktausgang und ein Steuerimpulsausgang des ISDN-Empfangsbausteins (IBC) mit Eingängen einer der Ansteuerung der Sendeeinrichtung (SE) dienenden Senderansteuer-Codiereinrichtung (SAC) verbunden sind.

12. Anordnung nach einem der Ansprüche 7 bis 11,

EP 0 399 359 B1

**dadurch gekennzeichnet,**
daß die Senderansteuer-Codiereinrichtung (SAC) derart ausgebildet und gesteuert ist, daß sie vier verschiedene Ansteuersignale für die Sendeeinrichtung (SE) erzeugt, von denen jeweils eins die Aussendung eines positiven bzw. eines negativen Pulses seitens der Sendeeinrichtung (SE) vorschreibt, eins einen Leitungsdatentakt für die Auswertung der die Polarität der auszusendenden Pulse vorschreibenden Ansteuersignale und eins den Beginn eines Bursts markierende Startpulse führt.

13. Anordnung nach einem Ansprüche 1 bis 12,
**dadurch gekennzeichnet,**
daß in dem die Jitterkennungsdaten aufnehmenden digitalen Speicher - Jitterspeicher (JS) -, der als Schreib-Lesespeicher ausgebildet ist, Folgen con Zahlenwerten gespeichert sind, die einen Jitter des Auslesetaktes für die einzelnen Bits eines Bursts in Jitterfrequenz, Jitterhub und Jittercharakteristik festlegen.

14. Anordnung nach Anspruch 13,
**dadurch gekennzeichnet,**
daß ein Jitterzähler vorgesehen ist, der mit einer mindestens eine Größenordnung höher als die Bittaktfrequenz der Bursts bemessenen Frequenz getaktet und von dem Jitterspeicher (JS) initialisiert wird.

15. Anordnung nach einem der Ansprüche 1 bis 14,
**dadurch gekennzeichnet,**
daß die Sendeeinrichtung (SE) eine einer vorgegebenen maximalen Anzahl von sich zeitlich überlappenden Impulsen entsprechende Zahl von Kurvenformspeichern (KS1...KS8) aufweist, in denen jeweils eine Kurvenform durch eine vorgegebene Zahl von Datenworten repräsentiert ist.

16. Anordnung nach Anspruch 15,
**dadurch gekennzeichnet,**
daß jeder Kurvenformspeicher (KS1...KS8) wenigstens drei Speicherbereiche aufweist, in denen die Kurvenform eines positiven Impulses, eines negativen Impulses und eines Nullpulses gespeichert sind.

17. Anordnung nach Anspruch 15 oder 16,
**dadurch gekennzeichnet,**
daß in jedem Kurvenformspeicher (KS1...KS8) 'n' identische Kurvenformen gespeichert sind, die zeitlich gegeneinander um $\dfrac{I}{n \times a}$ (a = Frequenz des Auslesetaktes) versetzt sind.

18. Anordnung nach einem der Ansprüche 15 bis 17,
**dadurch gekennzeichnet,**
daß jedem Kurvenformspeicher (KS1...KS8) ein individueller Kurvenformspeicher-Adreßzähler (AG) zugeordnet ist, dessen Adressen im Auslesetakt dem Kurvenformspeicher (KS1...KS8) zugeführt werden.

19. Anordnung nach einem der Ansprüche 15 bis 18,
**dadurch gekennzeichnet,**
daß Ausgänge der Kurvenformspeicher (KS1...KS8) parallel an Eingänge eines Addiermoduls (ADD) geführt sind.

20. Anordnung nach Anspruch 19,
**dadurch gekennzeichnet,**
daß ein Ausgang des Addiermoduls (ADD) mit einem Digital-/Ana log-Wandler (W) verbunden ist, dessen Ausgang an den Eingang eines an eine Teilnehmerleitung (T-Lt) angeschlossenen Tiefpasses (TP) geführt ist.

## Claims

1. Arrangement for testing the transmission properties of subscriber connection modules and of digital terminals of a communications system which can be connected thereto, having a selection control device (SSE) of initialization of in each case one of the subscriber connection modules and for connection of individual subscriber interfaces of the same and of individual terminals to a test device,

8

a) having a transmitting device (SE) for producing test pulses which represent bits which are combined to form bursts and, in the sense of modelling specific cable types and lengths of the same, are formed in a defined manner in shape and amplitude and are jittered in a defined manner by reading curve-shape characteristic data and jitter identification data from digital memories, and digital/analog conversion of the data read

b) having a receiving device (EE) for receiving the test pulses which are received from the test item (P) and are emitted again in the course of a processing procedure which acts in the sense of a test loop, in which receiving device the receiving properties of a digital terminal can be set when testing a subscriber connection module, and the receiving properties of a subscriber connection module can be set when testing a terminal,

c) having an evaluation device ($\mu$P) for comparison of the test pulses emitted by the transmitting device (SE) with the test pulses received by the receiving device (EE),

d) having a coupling device (NT) for coupling the transmitting device (SE) and the receiving device (EE) to the line interface of the respective test item (P),

e) and having a central microcomputer (PC) for coordination of the transmitting device (SE), receiving device (EE), evaluation device (AE) and selection control device (SSE).

2. Arrangement according to Claim 1, characterized in that a sampling device (AE) is connected to the line interface of the respective test item (P), which sampling device (AE) is used to detect the transmitting signals from the test item (P) and has a memory (RAMa) for storing the sampled signal values of at least one burst cycle.

3. Arrangement according to Claim 1 or 2, characterized in that the selection control device (SSE) is equipped with peripheral and peripheral-like function modules which are identical, at least in terms of function, to corresponding function modules of the communications system which comprises the subscriber connection modules and terminals to be tested.

4. Arrangement according to one of Claims 1 to 3, characterized in that the receiving device (EE) has a microprocessor ($\mu$P) having at least one associated memory (RAMe) for communication with the central microprocessor (PC) and for control of the receiving properties of the receiving device (EE).

5. Arrangement according to Claim 4, characterized in that the memory (RAMe) is used for receiving the test pulses to be sent by the transmitting device (SE), and the microprocessor ($\mu$P) is used as an evaluation device for comparison of the stored transmitted pulses with the test pulses received by the receiving device (EE).

6. Arrangement according to Claim 4 or 5, characterized in that the receiving device (EE) has a terminal interface device (STID) which is connected by means of a PCM highway (PCM-in, PCM-out) to a peripheral processor (PBC) and by means of an HDLC line to a microprocessor bus (MB) which is assigned to the microprocessor ($\mu$P).

7. Arrangement according to Claim 6, characterized in that output lines are connected to the terminal interface device (STID), of which output lines one (c) carries line-synchronous clock pulses and another carries synchronisation pulses, and which represent the inputs of a transmitter drive coding device (SAC) which is used for driving the transmitting device (SE).

8. Arrangement according to one of Claims 4 to 7, characterized in that the receiving device (EE) has a subscriber interface device (SLID) which is connected by means of a serial, bidirectional interface (SIU) to the peripheral processor (PBC).

9. Arrangement according to Claims 7 and 8, characterized in that output lines are connected to the subscriber interface device (SLID), two of which output lines carry interface-device-specific signals and represent the inputs of the transmitter drive coding device (SAC).

10. Arrangement according to one of Claims 4 and 5, characterized in that the receiving device (EE) has an ISDN receiving module (IBC) which can be operated as an interface device for subscriber connections and for terminals and is connected via an ISDN interface to a communications control processor (ICC) at whose interface to the microprocessor ($\mu$P) the B-channels and the D-channel of the ISDN information can be monitored.

11. Arrangement according to Claim 10, characterized in that a clock output and a control pulse output of the ISDN receiving module (IBC) are connected to inputs of a transmitter drive coding device (SAC) which is used for driving the transmitting device (SE).

12. Arrangement according to one of Claims 7 to 11, characterized in that the transmitter drive coding device (SAC) is constructed and controlled in such a manner that it produces four different drive signals for the transmitting device (SE), of which one in each case prescribes the emission of a positive or of a negative pulse respectively on the part of the transmitting device (SE), one carries a line data clock for the evaluation of the drive signals which prescribe the polarity of the pulses to be emitted, and one carries the start pulses which mark the start of a burst.

13. Arrangement according to one of Claims 1 to 12, characterized in that sequences of numerical values are stored in the digital memory - jitter memory (JS) - which accommodates the jitter identification data and is constructed as a random access memory, which sequences of numerical values define a jitter of the read clock for the individual bits of a burst in terms of jitter frequency, jitter amplitude and jitter characteristic.

14. Arrangement according to Claim 13, characterized in that a jitter counter is provided which is clocked at a frequency which is dimensioned to be at least one order of magnitude higher than the bit clock frequency of the burst and is initialized by the jitter memory (JS).

15. Arrangement according to one of Claims 1 to 14, characterized in that the transmitting device (SE) has a number of curve shape memories (KS1...KS8) which correspond to a predetermined maximum number of pulses which overlap one another in time, and in which one curve shape is in each case represented by a predetermined number of data words.

16. Arrangement according to Claim 15, characterized in that each curve shape memory (KS1...KS8) has at least three memory regions in which the curve shape of a positive pulse, of a negative pulse and of a zero pulse are stored.

17. Arrangement according to Claim 15 or 16, characterized in that 'n' identical curve shapes are stored in each curve shape memory (KS1...KS8), which curve shapes are offset in time with respect to one another by $1/n \times a$ (a = frequency of the read clock).

18. Arrangement according to one of Claims 15 to 17, characterized in that an individual curve shape memory address counter (AG) is assigned to each curve shape memory (KS1...KS8) whose addresses are fed to the curve shape memory (KS1...KS8) in time with the read clock.

19. Arrangement according to one of Claims 15 to 18, characterized in that outputs from the curve shape memories (RS1...RS8) are fed in parallel form to inputs of an adding module (ADD).

20. Arrangement according to Claim 19, characterized in that an output from the adding module (ADD) is connected to a digital/analog converter (W), whose output is passed to the input of a low-pass filter (TP) which is connected to a subscriber line (T-Lt).

## Revendications

1. Dispositif pour contrôler les caractéristiques de transmission de modules de raccordement d'abonnés et de terminaux numériques, pouvant être raccordés à ces modules, d'un système de communication comportant un dispositif de commande de sélection (SSE) pour l'initialisation de l'un des modules de raccordement d'abonnés et le raccordement d'interfaces individuelles d'abonnés de ces modules ainsi que de terminaux individuels à un dispositif de contrôle, comportant
   a) un dispositif d'émission (SE) pour produire des impulsions de contrôle, qui représentent les bits devant être rassemblés en rafales et qui sont conçus de façon définie du point de vue forme et amplitude et sont affectés d'instabilités, d'une manière définie, dans le sens d'une simulation de type déterminé de câbles et de longueurs déterminées de ces câbles, par lecture caractéristique de formes de courbes et de données caractéristiques d'instabilité à partir de mémoire numérique, ainsi qu'au moyen d'une conversion numérique/analogique des données lues,

b) un dispositif de réception (EE) servant à recevoir les impulsions de contrôle reçues par l'élément à tester (P) et émises à nouveau au cours d'un processus de traitement agissant dans le sens d'une boucle de contrôle, et dans lequel, lors du contrôle d'un module de raccordement d'abonné, les caractéristiques de réception d'un terminal numérique et, dans le cas du contrôle d'un terminal, les caractéristiques de réception d'un module de raccordement d'abonnés sont réglables,

c) un dispositif d'évaluation (μP) servant à comparer les impulsions de contrôle émises par le dispositif d'émission (SE) aux impulsions de contrôle reçues par le dispositif de réception (EE),

d) un dispositif de couplage (NT) pour l'accouplement du dispositif d'émission (SE) et du dispositif de réception (EE) à l'interface de ligne de l'objet respectif à tester (P), et

e) un micro-ordinateur central (PC) pour coordonner le dispositif d'émission (SE), le dispositif de réception (EE), le dispositif d'évaluation (AE) et le dispositif de commande de sélection (SSE).

2. Dispositif suivant la revendication 1, caractérisé par le fait qu'à l'interface de ligne de l'objet à tester (P) est raccordé un dispositif d'échantillonnage (AE), qui sert à détecter les signaux d'émission de l'objet à tester (P) et qui possède une mémoire (RAMa) servant à mémoriser les valeurs échantillonnées de signaux d'au moins un cycle de salve.

3. Dispositif suivant la revendication 1 ou 2, caractérisé par le fait que le dispositif de commande et de sélection (SSE) est pourvu de modules fonctionnels périphériques et proches de la périphérie, qui ont au moins les mêmes fonctions que des modules fonctionnels correspondants du système de communication, comprenant les modules de raccordement d'abonnés et les terminaux à contrôler.

4. Dispositif suivant l'une des revendications 1 à 3, caractérisé par le fait que le dispositif de réception (EE) est compris entre un microprocesseur (μP) possédant au moins une mémoire associée (RAMe) pour la communication avec le microprocesseur central (PC) et pour la commande des caractéristiques de réception du dispositif de réception (EE).

5. Dispositif suivant la revendication 4, caractérisé par le fait que la mémoire (RAMe) sert à recevoir les impulsions de contrôle qui doivent être émises par le dispositif d'émission (SE), et le microprocesseur (μP) sert de dispositif d'évaluation pour la comparaison des impulsions d'émission mémorisées, aux impulsions de contrôle reçues par le dispositif de réception (EE).

6. Dispositif suivant la revendication 4 ou 5, caractérisé par le fait que le dispositif de réception (EE) comporte un dispositif d'interface de terminal (STID), qui est relié, au moyen d'un bus MIC (PCM-in, PCM-out), à un processeur périphérique (PBC) et, au moyen d'une ligne HDLC, à un bus (MP) de microprocesseur, associé au microprocesseur (μP).

7. Dispositif suivant la revendication 6, caractérisé par le fait qu'au dispositif d'interface de terminal (STID) sont raccordées des lignes de sortie, dont l'une (c) transmet des impulsions de cadence synchrones du point de vue des lignes, et dont l'autre transmet des impulsions de synchronisation et qui représentent des entrées d'un dispositif de codage (SAC) de commande d'émetteur, utilisé pour la commande du dispositif d'émission (SE).

8. Dispositif suivant l'une des revendications 4 à 7, caractérisé par le fait que le dispositif de réception (EE) possède un dispositif d'interface d'abonnés (SLID), qui est relié au processeur périphérique (PBC) au moyen d'une interface série bidirectionnelle (SIU).

9. Dispositif suivant la revendication 7 ou 8, caractérisé par le fait qu'au dispositif d'interface d'abonnés (SLID) sont raccordées des lignes de sortie, dont deux véhiculent des signaux spécifiques au dispositif d'interface et qui représentent les entrées du dispositif de codage (SAC) de commande d'émetteur.

10. Dispositif suivant l'une des revendications 4 et 5, caractérisé par le fait que le dispositif de réception (EE) comporte un module de réception ISDN (IBC), que l'on peut faire fonctionner en tant que dispositif d'interface pour des postes d'abonnés et pour des terminaux et qui est relié, par l'intermédiaire d'une interface ISDN, à un processeur de commande de communication (ICC), les canaux B et le canal D des informations ISDN pouvant être contrôlés au niveau de l'interface de liaison de ce processeur de commande avec le microprocesseur (μP).

11. Dispositif suivant la revendication 10, caractérisé par le fait qu'une sortie de cadence et une sortie d'impulsions de commande du module de réception ISDN (IPC) sont reliées à des entrées d'un dispositif de codage (SAC) de commande d'émetteur utilisé pour la commande du dispositif d'émission (SE).

12. Dispositif suivant l'une des revendications 7 à 11, caractérisé par le fait que le dispositif de codage (SAC) de commande d'émetteur est agencé et commandé de telle sorte qu'il produit, pour le dispositif d'émission (SE), quatre signaux de commande différents, dont l'un prescrit respectivement l'émission d'une impulsion positive ou d'une impulsion négative du côté du dispositif d'émission (SE), dont un autre véhicule une cadence de données de lignes pour l'évaluation des signaux de commande prescrivant la polarité des impulsions devant être émises, et dont un autre véhicule des impulsions de départ marquant le début d'une salve.

13. Dispositif suivant l'une des revendications 1 à 12, caractérisé par le fait que dans la mémoire numérique recevant les données de caractérisation d'instabilités mémoire d'instabilités JS -, qui est réalisée sous la forme d'une mémoire d'enregistrement et de lecture, sont mémorisées des suites de valeurs numériques, qui fixent une instabilité de la cadence de lecture pour les différents bits d'une salve du point de vue fréquence, excursion et caractéristiques des instabilités.

14. Dispositif suivant la revendication 13, caractérisé par le fait qu'il est prévu un compteur d'instabilités, qui est commandé de façon cadencée par une fréquence choisie supérieure d'au moins un ordre de grandeur à la fréquence de cadence de bits des salves, et qui est initialisé par la mémoire d'instabilités (JS).

15. Dispositif suivant l'une des revendications 1 à 14, caractérisé par le fait que le dispositif d'émission (SE) possède un nombre, qui correspond au nombre maximum prédéterminé d'impulsions se chevauchant dans le temps, de mémoire (KS1...KS8) de formes de courbes, dans lesquelles respectivement une forme de courbe est représentée par un nombre prédéterminé de mots de données.

16. Dispositif suivant la revendication 15, caractérisé par le fait que chaque mémoire (KS1...KS8) de formes de courbes possède au moins trois zones de mémoire, dans lesquelles sont mémorisées la forme de courbe d'une impulsion positive, d'une impulsion négative et d'une impulsion nulle.

17. Dispositif suivant la revendication 15 ou 16, caractérisé par le fait que dans chaque mémoire (KS1...KS8) de formes de courbes sont mémorisées "n" formes de courbes identiques, qui sont décalées réciproquement dans le temps de $\dfrac{1}{n \times a}$ (a = fréquence de la cadence de lecture).

18. Dispositif suivant l'une des revendications 15 à 17, caractérisé par le fait qu'à chaque mémoire (KS1...KS8) de formes de courbes est associé un compteur individuel d'adresses (AG) de mémoire de formes de courbes, dont les adresses sont envoyées, à la cadence de lecture, à la mémoire (KS1...KS8) de formes de courbes.

19. Dispositif suivant l'une des revendications 15 à 18, caractérisé par le fait que les sorties des mémoires (KS1...KS8) de formes de courbes sont raccordées parallèlement aux entrées d'un module additionneur (ADD).

20. Dispositif suivant la revendication 19, caractérisé par le fait qu'une sortie du module additionneur (ADD) est reliée à un convertisseur numérique/analogique (W), dont la sortie est raccordée à l'entrée d'un filtre passe-bas (TP), qui est raccordé à une ligne d'abonné (T-Lt).

## FIG 1

## FIG 2

FIG 3

FIG 4